# EUROPÄISCHE PATENTANMELDUNG

(11) **EP 3 590 872 A1**
(43) Veröffentlichungstag der Anmeldung: **08.01.2020**
(21) Anmeldenummer: 19020410.7
(22) Anmeldetag: 01.07.2019
(51) Int. Cl.: B65G 47/14

(54) **VORRICHTUNG ZUM VEREINZELN UND AUSRICHTEN VON STIFTFÖRMIGEM STÜCKGUT**

(30) Priorität: 05.07.2018 DE 102018116357
(71) Anmelder: Kolodziej, Wolfgang, 49326 Melle (DE)
(72) Erfinder: Kolodziej, Jan Christopher, 49326 Melle (DE)
(74) Vertreter: Dekker, Lothar Karl Rudolf

(57) **Zusammenfassung**

Die vorliegende Erfindung betrifft eine Vorrichtung (1) zum Vereinzeln und Ausrichten von stiftförmigem, einen Kopf und einen Schaft aufweisendem Stückgut, insbesondere Nieten, Schrauben, Bolzen oder dergleichen, umfassend:
- ein im Wesentlichen trichterförmiges Behältnis (2) zur Aufnahme des Stückgutes, mit zumindest zwei Wandabschnitten (3, 4), welche das Behältnis (2) zumindest in einem vorderen Bereich begrenzen und zu einer Mittelquerebene (6) des Behältnisses (2) unter einem Winkel geneigt angeordnet sind, sowie einer Rückwand (5),
- ein unterhalb einer die beiden Wandabschnitte (3, 4) beabstandenden, insbesondere schlitzförmigen, Ausnehmung (7) angeordnetes endlos umlaufendes Fördermittel (8, 8a), welches das Stückgut von einer Annahmeebene auf eine höher gelegene Abgabeebene fördert,
- wobei das Fördermittel (8, 8a) eine mit Mitnahmeelementen (15) versehene Förderfläche (9) aufweist,
wobei innerhalb des Behältnisses (2) zumindest ein die Ausnehmung (7) zwischen den Wandabschnitten (3, 4) überbrückendes Separatorelement (30) angeordnet ist, welches sich abschnittsweise in Längsrichtung des Fördermittels (8, 8a) erstreckt und einen die Förderfläche (9) im Wesentlichen bogenförmig überbrückenden Durchgang (31) aufweist, mit einem Einlaufbereich (32), der seitlich durch sich in Längsrichtung des Separatorelementes (30) aufweitende Ablenkabschnitte (33) abschnittsweise begrenzt ist.

## Beschreibung

Die vorliegende Erfindung betrifft eine Vorrichtung zum Vereinzeln und Ausrichten von stiftförmigem, einen Kopf und einen Schaft aufweisendem Stückgut, insbesondere Nieten, Schrauben, Bolzen oder dergleichen, gemäß dem Oberbegriff des Anspruches 1.

Eine Vorrichtung der eingangs genannten Art ist aus der WO 2007/068129 A1 bekannt. Die aus der WO 2007/068129 A1 bekannte Vorrichtung umfasst ein trichterförmiges Behältnis zur Aufnahme von Stückgut, mit einer Vorderwand und einer Rückwand, die einander gegenüberliegend und jeweils zur Vertikalen unter einem Winkel nach außen geneigt angeordnet sind, sowie zumindest zwei sich zwischen der Vorderwand und der Rückwand ersteckenden Seitenwänden. Innerhalb einer Ausnehmung in der Vorderwand ist ein angetriebenes Förderband angeordnet, das unter einem gleichen Winkel wie die Vorderwand zur Vertikalen geneigt angeordnet ist und das Stückgut, Vorformlinge von Kunststofflaschen oder Schrauben, von einer Annahmeebene im Behältnis auf eine höher gelegene Abgabeebene fördert. Dabei soll mittels des Förderbandes, welches durch sich über die Breite des Förderbandes erstreckende Mitnehmerin einzelne Abschnitte unterteilt ist, das Stückgut einzeln aus dem Behältnis entnommen werden. Dies ist bei den Vorformlingen von Kunststofflaschen darstellbar, da diese aufgrund ihrer Größe und Form einfach zu separieren sind. Stiftförmiges, einen Kopf und einen Schaft aufweisendes Stückgut, wie Nieten oder Schrauben, sind in der Regel in ihren Abmessungen erheblich kleiner und neigen aufgrund ihrer Kontur dazu, sich ineinander zu verhaken, was eine Vereinzelung durch das Förderband zumindest sehr stark erschwert, da die Abschnitte zwischen den Mitnehmern in der Regel mehr als eine Niete oder Schraube aufnehmen und abfördern.

Es ist Aufgabe der vorliegenden Erfindung, eine Vorrichtung zum Vereinzeln und Ausrichten von stiftförmigem, einen Kopf und einen Schaft aufweisendem Stückgut in der Weise weiterzubilden, dass eine gleichmäßige, zur Längsachse des Fördermittels parallele Orientierung des von dem Fördermittel geförderten Stückgutes vor Erreichen der Abgabeebene bewirkt wird.

Diese Aufgabe wird erfindungsgemäß durch die Merkmale des Anspruches 1 gelöst. Vorteilhafte Weiterbildungen sind Gegenstand der Unteransprüche.

Gemäß dem Anspruch 1 wird eine Vorrichtung zum Vereinzeln und Ausrichten von stiftförmigem, einen Kopf und einen Schaft aufweisendem Stückgut, insbesondere Nieten, Schrauben, Bolzen oder dergleichen, vorgeschlagen. Unter einem stiftförmigen, einen Kopf und einen Schaft aufweisenden Stückgut ist ein Stückgut zu verstehen, welches einen im Wesentlichen zylindrischen Schaft und zumindest einen hiervon im Durchmesser und/oder in der Kontur abweichenden Endabschnitt respektive Kopf aufweist. Die Vorrichtung umfasst ein im Wesentlichen trichterförmiges Behältnis zur Aufnahme des Stückguts, mit zumindest zwei Wandabschnitten, welche das Behältnis zumindest in einem vorderen Bereich begrenzen und zu einer Mittelquerebene des Behältnisses unter einem Winkel geneigt angeordnet sind, sowie einer Rückwand. Ein unterhalb einer die beiden Wandabschnitte beabstandenden, insbesondere schlitzförmigen, Ausnehmung angeordnetes endlos umlaufendes Fördermittel fördert das Stückgut von einer Annahmeebene auf eine höher gelegene Abgabeebene. Das Fördermittel weist eine mit Mitnahmeelementen versehene Förderfläche auf. Die Förderfläche befindet sich unterhalb oder zwischen der Ausnehmung. Um eine gleichmäßige, zu dem Fördermittel parallele Orientierung des von dem Fördermittel geförderten Stückgutes vor dem Erreichen der Abgabeebene zu bewirken, ist erfindungsgemäß vorgesehen, dass innerhalb des Behältnisses zumindest ein die Ausnehmung zwischen den Wandabschnitten überbrückendes Separatorelement angeordnet ist, welches einen die Förderfläche im Wesentlichen bogenförmig überbrückenden Durchgang aufweist, mit einem Einlaufbereich, der seitlich durch sich in Längsrichtung des zumindest einen Separatorelementes aufweitende Ablenkabschnitte begrenzt ist. Das zumindest eine Separatorelement bewirkt eine weitgehende Vereinzelung des von dem Fördermittel transportierten Stückgutes, indem die beiderseits des Durchgangs angeordneten Ablenkabschnitte bei einer Zuführung von mehr als einem stiftförmigen Stückgut durch das Fördermittel, beispielsweise, wenn zwei oder mehr über- und/oder nebeneinanderliegend geförderte Stückgüter den Durchgang erreichen, diese überzähligen Stückgüter seitlich abweisen, während bevorzugt nur eines der Stückgüter den Durchgang passiert. Dabei wird Stückgut auch dann seitlich abgelenkt, wenn eine Ausrichtung des oder der Stückgüter quer oder zumindest unter einem Winkel geneigt zum Fördermittel vorliegt. Neben der Vereinzelung wird durch das zumindest eine Separatorelement auch eine weitgehend gleichmäßige Ausrichtung des Stückgutes bewirkt, so dass das Stückgut beim Verlassen des zumindest einen Separatorelementes entweder mit dem Kopf oder dem Fuß voran, jedoch immer im Wesentlichen parallel zur Längsachse des Fördermittels weitergefördert wird. Besonders bevorzugt ist durch das Separatorelement eine einheitliche Ausrichtung aller das Separatorelement passierenden Stückgüter erreichbar, bei welcher das Stückgut das Separatorelement mit dem Fuß voran verlässt.

Dabei kann der Einlaufbereich beidseitig einen unteren Abschnitt und einen oberen Abschnitt aufweisen, die den Durchgang quer zur Förderrichtung begrenzen, wobei sich die unteren Abschnitte in vertikaler Richtung des Separatorelementes abschnittsweise zwischen dem jeweiligen Wandabschnitt des Behältnisses und dem oberen Abschnitt erstrecken, und die unteren Abschnitte einen Abstand zueinander aufweisen, der kleiner als ein Abstand der oberen Abschnitte zueinander ist. Dabei können die unteren Abschnitte und die sich daran anschließenden oberen Abschnitte einen senkrecht zu der überbrückten Ausnehmung etwa rampenförmig ansteigenden Vorderkantenverlauf aufweisen. Hierdurch wird erreicht, dass das zugeführte Stückgut an den Durchgang seitlich begrenzenden Vorderkanten des unteren Abschnittes in Abhängigkeit von der Orientierung des zugeführten Stückgutes angehoben werden kann. Dieses Anheben kann bei übereinanderliegend zugeführtem Stückgut dazu führen, dass sich diese voneinander lösen können. Durch das Lösen voneinander kann das obenauf liegende Stückgut durch das Separatorelement seitlich abgelenkt werden und entlang eines der Wandabschnitte in das trichterförmige Behältnis zurückrutschen. Das andere Stückgut kann den Durchgang passieren.

Insbesondere kann die Beabstandung der unteren Abschnitte kleiner als der Durchmesser des Kopfes und größer als der Durchmesser des Schaftes sein, während die Beabstandung der oberen Abschnitte zumindest abschnittsweise größer als der Durchmesser des Kopfes des Schaftes ist. Je nach Ausrichtung des zugeführten Stückgutes, d.h. mit dem Kopf oder dem Schaft voran, kann das Stückgut entlang einer der Vorderkanten der unteren Abschnitte aufgeschoben bzw. angehoben werden, bevor es zwischen den oberen Abschnitten hindurch den Einlaufbereich passiert und vollständig in den Durchgang eintreten kann.

Bevorzugt können die Ablenkabschnitte einen vertikal zur Förderfläche im Wesentlichen rampenförmig ansteigenden Verlauf aufweisen. Dadurch wird erreicht, dass nachgefördertes Stückgut im Einlaufbereich bereits von einem der Ablenkabschnitte seitlich abgelenktes Stückgut den rampenförmigen Ablenkabschnitt weiter hochschiebt, bevor das Stückgut anschließend von dem Ablenkabschnitt zum benachbarten Wandabschnitt gelangt und diesen hinunterrutscht, zurück in das trichterförmige Behältnis.

Gemäß einer bevorzugten Ausführungsform kann das zumindest eine Separatorelement eine im Wesentlichen zylindrische Form aufweisen. Insbesondere kann das zumindest eine Separatorelement einen etwa kalbkegelförmigen Querschnitt aufweisen. Dabei weist das zumindest eine Separatorelement im Einlaufbereich seinen kleinsten Radius auf, der in Förderrichtung des Fördermittels gesehen zumindest abschnittsweise kontinuierlich zunimmt.

Alternativ kann das zumindest eine Separatorelement eine im Wesentlichen pyramidale Form aufweisen.

Das zumindest eine Separatorelement ist entlang der Ausnehmung oberhalb der Annahmeebene und unterhalb der Abgabeebene angeordnet, insbesondere oberhalb eines maximalen Füllstandes an Stückgut in dem Behältnis. Dadurch ist gewährleistet, dass ein ausreichender Förderweg vorhanden ist, um das Stückgut zu vereinzeln und auszurichten, bevor es die Abgabeebene erreicht.

Vorzugsweise kann das zumindest eine Separatorelement auswechselbar in dem Behältnis angeordnet sein. Somit lässt sich das Separatorelement an unterschiedliche Geometrien von zu vereinzelndem Stückgut anpassen. Zudem kann eine Anpassung hinsichtlich der Position entlang der Ausnehmung erfolgen. Insbesondere können bei Bedarf auch mehrere Separationselemente hintereinander in dem Behältnis angeordnet sein, um eine mehrstufige Vereinzelung und Ausrichtung des Stückgutes zu bewirken.

Besonders vorteilhaft ist, dass der Vorrichtung eine Messvorrichtung zugeordnet sein kann, welche zur Erfassung der Geometrie des Stückgutes eingerichtet ist. Mittels der Messvorrichtung kann die Geometrie des jeweiligen Stückgutes erfasst werden. Insbesondere kann ein Abgleich mit einer vorgebbaren Länge und/oder einem vorgebbaren Durchmesser jedes einzelnen Stückgutes durchgeführt werden, um zu gewährleisten, dass die separierten Stückgüter identische Abmessungen aufweisen. Dabei ist es vorteilhaft, dass die Förderung des Stückgutes durch die Vorrichtung als auch dessen Separierung durch das zumindest eine Separatorelement im Wesentlichen erschütterungsfrei erfolgen. Hierdurch wird der Einsatz einer empfindlichen, berührungslos arbeitenden Messvorrichtung ermöglicht, welche das vorbeigeförderte und ausgerichtete Stückgut vermessen kann. Die Anordnung der Messvorrichtung erfolgt bevorzugt unterhalb bzw. vor der Abgabeebene, so dass vor oder nach der Abgabe des vermessenen Stückgutes vom Fördermittel an eine nachgeordnete Weiterförderungsanordnung, wie beispielsweise eine Rutsche, eine Ausscheidung des Stückgutes erfolgen kann, welches nicht den Anforderungen an die Geometrie respektive den Abmessungen entspricht. Eine Anordnung der Messvorrichtung in der Abgabeebene bzw. auf Höhe der Abgabeebene oder der Abgabeebene nachgeordnet ist ebenfalls denkbar. Im einfachsten Fall kann in einer solchen Situation, in der ein Stückgut als von den vorgegebenen Abmessungen abweichend identifiziert wurde, ein Antrieb des Fördermittels durch eine Steuerungsvorrichtung unterbrochen werden, welche hierfür die von der Messvorrichtung empfangenen Signale auswertet. So kann das durch die Messvorrichtung als fehlerhaft identifizierte Stückgut beispielsweise manuell durch eine Bedienperson aussortiert werden. Denkbar ist der Einsatz einer Vorrichtung, welche das Aussortieren von auszuscheidendem Stückgut automatisiert vornimmt.

Insbesondere kann die Messvorrichtung zur optischen Erfassung der Geometrie des Stückgutes eingerichtet sein.

Besonders vorteilhaft ist es, wenn die außenseitige Oberfläche des Fördermittels, auf welcher das Stückgut aufliegt, eine dunkle Farbgebung aufweist. Hierdurch kann ein größtmöglicher Helligkeitskontrast zu dem zu überprüfenden Stückgut erreicht werden, der die Genauigkeit der Überprüfung durch die berührungslos arbeitende, insbesondere optische, Messvorrichtung verbessert.

Eine bevorzugte Weiterbildung der Vorrichtung sieht vor, dass die Ausnehmung eine Breite aufweist, die etwa der Breite der auf dem Fördermittel angeordneten Mitnahmeelemente entspricht, so dass die Mitnahmeelemente berührungslos zwischen den zwei Wandabschnitten mit dem Förderband umlaufen, wobei die Breite der Ausnehmung jedoch kleiner als zumindest der Durchmesser des Kopfes des stiftförmigen Stückgutes ist. Insbesondere ist die Breite kleiner als der Durchmesser des Fußes des Stückgutes gewählt. Hierdurch wird erreicht, dass das von einem Mitnahmeelement mitgeführte Stückgut nicht auf der Förderfläche des Fördermittels aufliegt, sondern sich auf den benachbarten Wandabschnitten des Behältnisses abstützt. Dabei gleiten Kopf und Fuß des Stückgutes auf der Oberfläche der Wandabschnitte. Dies hat den Effekt, dass von einem Mitnahmeelement gefördertes Stückgut aufgrund der Lage des Schwerpunkts im Bereich des Kopfes des Stückgutes bei einer Ausrichtung mit dem Fuß voran vor oder spätestens mit dem Erreichen des Separatorelementes in das Behältnis zurückrutscht. Hingegen wird Stückgut, welches mit dem Kopf voran liegend von einem Mitnahmeelement erfasst wird, zumindest bis zum Separatorelement weitergefördert. Auf diese Weise lässt sich die Orientierung des Stückgutes festlegen, wodurch die nachfolgende Vermessung durch die Messvorrichtung vereinfacht wird.

Insbesondere kann das Fördermittel eine elektromechanische, mechanische oder pneumatische Aktuatorik antreibbar sein. Insbesondere der pneumatische Antrieb des Fördermittels ist vorteilhaft, da dieser weitgehend verschleißfrei betreibbar ist. Dies ist vor dem Hintergrund eines wiederholten Startens und Stoppens des Fördermittels vorteilhaft, um durch die Messvorrichtung identifiziertes fehlerhaftes Stückgut aussortieren zu können, welches vorgegebenen geometrischen Abmessungen nicht entspricht.

Die Ansteuerung der Aktuatorik durch die Steuerungsvorrichtung kann in Abhängigkeit von den Signalen der Messvorrichtung erfolgen.

Die vorliegende Erfindung wird nachstehend anhand von in den Zeichnungen dargestellten Ausführungsbeispielen näher erläutert.

Es zeigen:
- Fig. 1: eine perspektivische Ansicht einer Vereinzelungsvorrichtung;
- Fig. 2: eine isometrische Ansicht eines Behältnisses der Vereinzelungsvorrichtung;
- Fig. 3: eine Ansicht von oben in das Behältnis gemäß Fig. 2;
- Fig. 4: eine Ansicht auf eine schematisch dargestellte Förderfläche eines Förderbandes der Vereinzelungsvorrichtung;
- Fig. 5: eine schematische Ansicht einer alternativen Ausgestaltung eines als Förderband ausgeführten Fördermittels;
- Fig. 6: eine schematische Darstellung eines Separatorelementes in perspektivischer Ansicht.

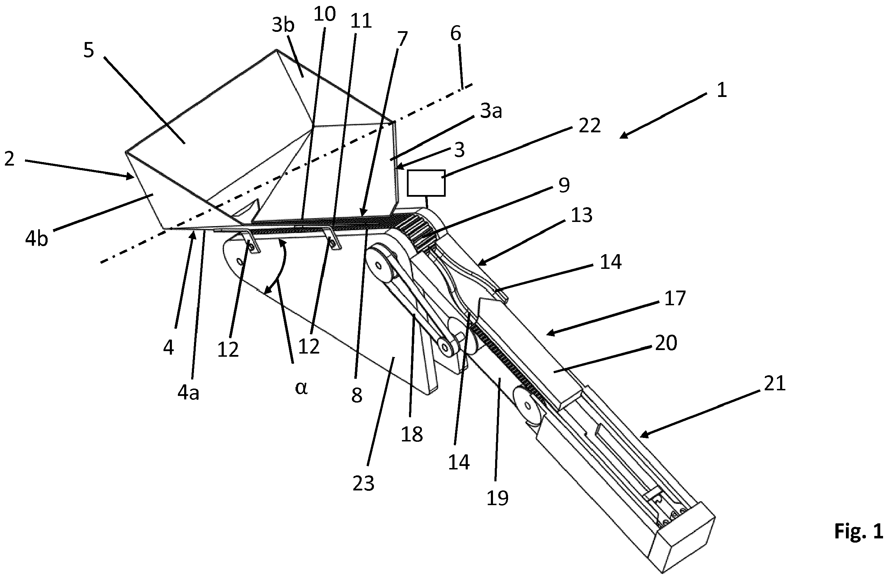

Fig. 1 zeigt eine perspektivische Ansicht einer Vereinzelungsvorrichtung 1 zum Vereinzeln und Ausrichten von stiftförmigem, einen Kopf und einen Schaft aufweisendem Stückgut, insbesondere Nieten, Schrauben, Bolzen oder dergleichen. Unter stiftförmigem, einen Kopf und einen Schaft aufweisendem Stückgut ist ein Stückgut zu verstehen, welches einen im Wesentlichen zylindrischen Schaft und einen hiervon im Durchmesser und/oder in der Kontur abweichenden Endabschnitt respektive Kopf aufweist. Die Vorrichtung 1 umfasst ein im Wesentlichen trichterförmiges Behältnis 2 zur Aufnahme des Stückgutes. Das Behältnis 2 weist zwei Wandabschnitte 3, 4 auf, die das Behältnis 2 zumindest in einem vorderen Bereich begrenzen, sowie zumindest eine Rückwand 5, welche das Behältnis 2 in einem hinteren Bereich begrenzt. Dabei können die beiden Wandabschnitt 3, 4 das Behältnis 2 auch seitlich zumindest abschnittsweise begrenzen. Es können auch weitere Wandsegmente vorgesehen sein, welche zwischen den Wandabschnitten 3, 4 und der Rückwand 5 angeordnet sind, um das Behältnis 2 in Umfangsrichtung zu begrenzen. Die zumindest eine sich zwischen den Wandabschnitten 3, 4 erstreckende Rückwand 5 beabstandet die beiden Wandabschnitte 3, 4 im rückwärtigen Bereich zueinander. Die Wandabschnitte 3, 4 und die zumindest eine Rückwand 5 sind abschnittsweise einander gegenüberliegend und jeweils zu einer gedachten Mittelquerebene 6 des Behältnisses 2 unter einem Winkel nach außen geneigt angeordnet, sodass sich die im Wesentlichen trichterförmige Ausgestaltung des Behältnisses 2 ergibt.

Die beiden Wandabschnitte 3 und 4 sind im vorderen Bereich des Behältnisses 2 durch eine durchgehende, insbesondere schlitzförmige, Ausnehmung 7 zueinander beabstandet, welche sich etwa vom tiefsten Punkt des Behältnisses 2 bis zum oberen Rand der Wandabschnitte 3, 4 erstreckt.

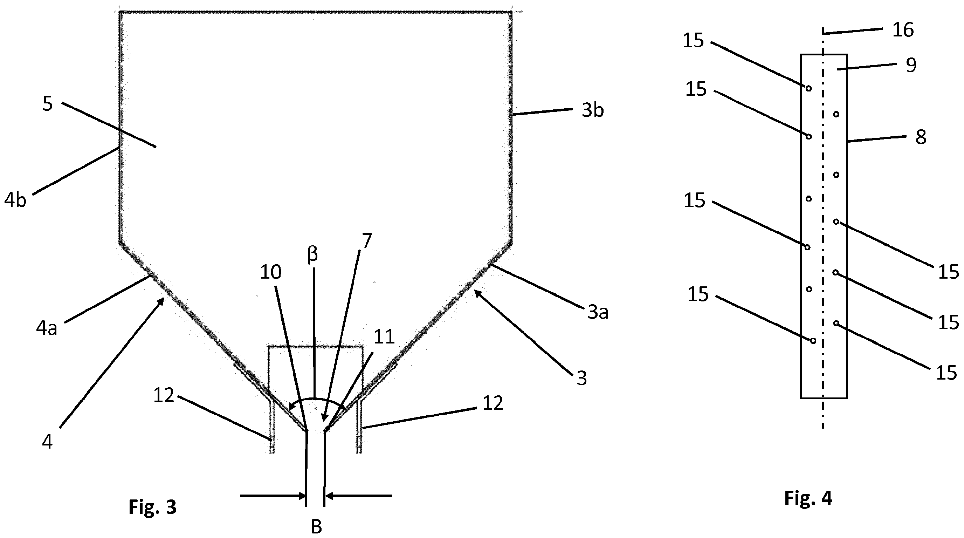

Die beiden Wandabschnitte 3, 4 weisen jeweils ein vorderes Segment 3a, 4a und ein hinteres Segment 3b, 4b auf. Die vorderen Segmente 3a, 4a der Wandabschnitte 3, 4 erstecken sich ausgehend von der Ausnehmung 7 abschnittsweise in Richtung der Rückwand 5. An die vorderen Segment 3a, 4a schließen sich die hinteren Segmente 3b, 4b, welche zu den vorderen Segmenten 3a, 4a unter einem Winkel geneigt ausgeführt sind, an. Die hinteren Segmente 3b, 4b erstrecken sich bis zu der Rückwand 5 und sind unter einem Winkel von etwa 90° geneigt zu der Rückwand 5 angeordnet. Die vorderen Segmente 3a, 4a weisen bezüglich einer Längsachse der Ausnehmung 7 eine Neigung β auf, wie aus der Darstellung in Fig. 4 ersichtlich ist.

Parallel zu der Ausnehmung 7 ist unterhalb der Wandabschnitte 3 und 4 ein endlos umlaufendes als Förderband 8 ausgebildetes Fördermittel angeordnet, welches um zueinander beabstandet angeordnete - nicht näher dargestellte - Umlenkrollen umläuft. Das Fördermittel kann auch als eine Gliederkette ausgebildet sein, welches um korrespondierende Ritzel umläuft. Das Förderband 8 ist unter einem gleichen Winkel α wie die Wandabschnitte 3, 4 zur Mittelquerebene 6 geneigt angeordnet. Das Förderband 8 fördert das Stückgut aus dem Behältnis 2 von einer Annahmeebene im Inneren des Behältnisses 2 auf eine höher gelegene Abgabeebene oberhalb des Behältnisses 2. Die Annahmeebene ist variabel, da diese sich durch den jeweiligen Füllstand des Behältnisses 2 mit Stückgut definiert. Die Abgabeebene bildet der Bereich des oberen Umlenkpunktes des Förderbandes 8. Zur Mitnahme des Stückgutes weist das Förderband 8 eine mit Mitnahmeelementen 15 versehene Förderfläche 9 auf. Das Förderband 8 weist eine Neigung α auf, welche größer oder gleich 30° und kleiner oder gleich 60° ist.

Die Ausnehmung 7 ist von zueinander parallelen Vorderkanten 10, 11 der V-förmig auf das Förderband 8 zulaufend angeordneten Wandabschnitte 3, 4 begrenzt. Die Vorderkanten 10 und 11 münden oberhalb des Förderbandes 8 oder in einer Ebene mit der Förderfläche 9 des Förderbandes 8. Zur Befestigung an einem das Förderband 8 aufnehmenden Gestell 23 sind Laschen 12 vorgesehen. Das Gestell 23 nimmt eine Aktorik zum Antreiben einer der Umlenkrollen auf, um das Förderband 8 endlos umlaufend anzutreiben. Die Neigung der Vorderkanten 10, 11, welche die, insbesondere schlitzförmige, Ausnehmung 7 begrenzen, korrespondiert mit der Neigung α des Förderbandes 8.

An die Abgabeebene schließt sich eine Rutsche 13 an. Die Rutsche 13 weist zwei Rinnen 14 auf, an die das Stückgut von dem Förderband 8 übergeben wird. Die Rinnen 14 weisen ein im Wesentlichen U-förmiges Profil auf. Der Querschnitt der Rinnen 14 ist breiter als der Kopf und schmaler als die Länge des Schafts des Stückgutes, das vereinzelt werden sollen. Der Abstand zwischen den Rinnen 14 weitet sich in Längsrichtung der Rutsche vom Annahmebereich zum Abgabebereich auf. Die Rinnen 14 weisen eine die Haftreibung minimierende Beschichtung auf.

Der Rutsche 13 ist eine Fördervorrichtung 17 nachgeordnet, welche das von der Rutsche 13 kommende Stückgut mit einer von der Antriebsgeschwindigkeit des im Behältnis 2 angeordneten Förderbandes 8 abhängigen Fördergeschwindigkeit abtransportiert.

Hierbei ist die Fördervorrichtung 17 trieblich mit dem Förderband 8 gekoppelt. Die Fördervorrichtung 17 kann als ein weiteres, um Umlenkrollen endlos umlaufendes Förderband 19 mit einer Förderfläche ausgebildet sein. Zum Antreiben kann eine der Umlenkrollen des im Behältnis 2 angeordneten Förderbandes 8 durch einen Riementrieb 18 mit einer der Umlenkrollen der Fördervorrichtung 17 verbunden sein.

Zur Unterteilung einer Förderfläche der Fördervorrichtung 17 in zwei zueinander beabstandete, parallele Förderabschnitte, die an den im Abgabebereich der beiden Rinnen 14 zueinander bestehenden Abstand angepasst sind, ist zumindest ein Separationselement 20 vorgesehen.

An die Fördervorrichtung 17 schließt sich im dargestellten Ausführungsbeispiel eine Ausgabevorrichtung 21 an, welche eine einzelne Entnahme des Stückgutes ermöglicht.

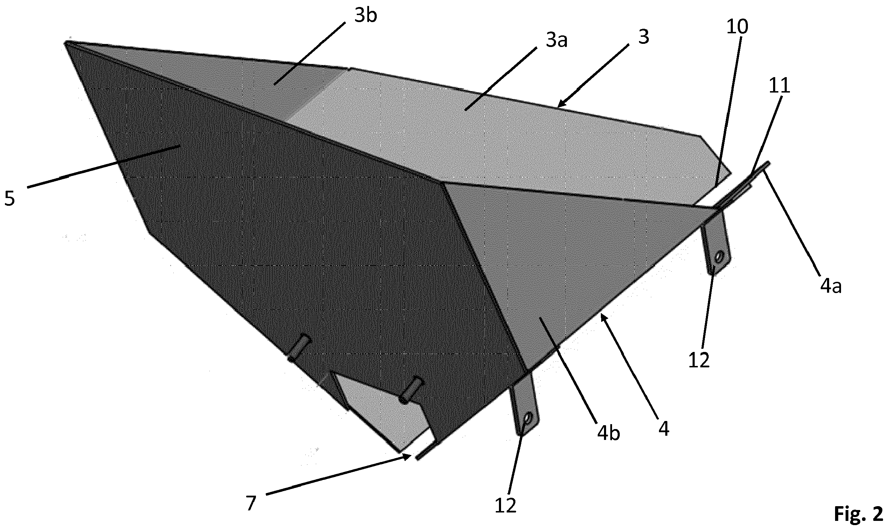

Die Darstellung in Fig. 2 zeigt eine isometrische Ansicht des Behältnisses 2 der Vereinzelungsvorrichtung 1. In Fig. 3 ist eine Ansicht von oben in das Behältnis 2 dargestellt. Die Ausnehmung 7 weist eine Breite B auf, welche höchstens der Länge des Stückgutes entspricht.

In Fig. 4 ist eine Ansicht auf die schematisch dargestellte Förderfläche 9 des Förderbandes 8 der Vereinzelungsvorrichtung 1 dargestellt. Die Mitnahmeelemente 15 sind beidseitig zur Längsachse 16 des Förderbandes 8 zwischen einem jeweiligen Randbereich und der Längsachse 16 angeordnet. In Längsrichtung des Förderbandes 8 sind die Mitnahmeelemente 15 wechselseitig versetzt zueinander angeordnet. Die Mitnahmeelemente 15 sind als zylindrische Stifte ausgebildet, die sich im Wesentlichen senkrecht zur Förderfläche 9 des Förderbandes 8 erstrecken. Dabei können die Mitnahmeelemente 15 einen kreisförmigen oder polygonalen Querschnitt aufweisen. Darüber hinaus können die Mitnahmeelemente paarweise nebeneinander auf der Förderfläche 9 des Förderbandes 8 angeordnet sein.

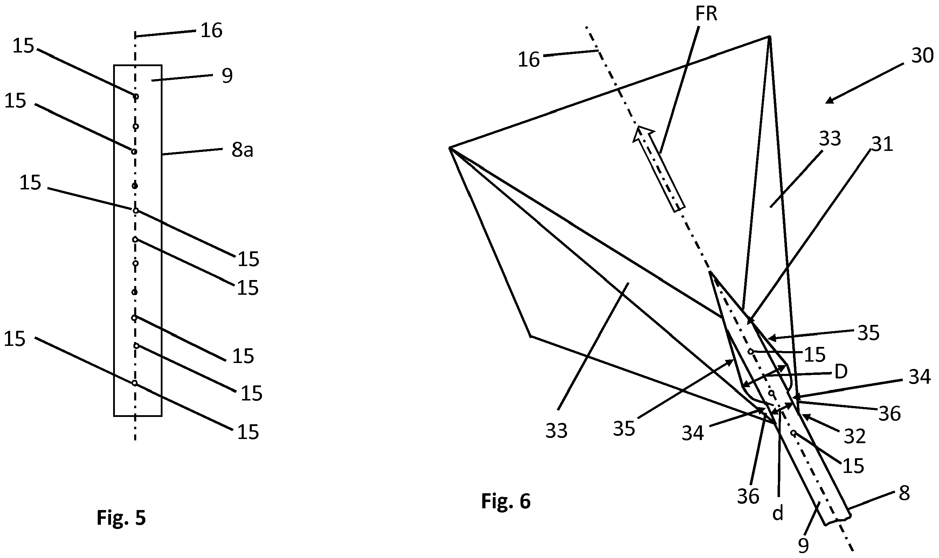

Fig. 5 zeigt eine schematische Ansicht einer alternativen Ausgestaltung eines als Förderband 8a ausgeführten Fördermittels. Das Förderband 8a ist schmaler ausgeführt, als das in Fig. 4 dargestellte Förderband 8. In Längsrichtung des Förderbandes 8a sind die Mitnehmerelemente 15 fluchtend hintereinander angeordnet. Diese Ausführungsform des Fördermittels beschränkt weitgehend die Mitnahme des stiftförmigen Stückguts auf ein einzelnes Element im Bereich des jeweiligen Mitnehmerelementes 15.

In Abhängigkeit von der Ausgestaltung des Förderbandes 8 bzw. 8a respektive Fördermittels gemäß den Fig. 4 bzw. 5 weist die Rutsche 13 zwei bzw. im Fall des Förderbandes 8a nur eine Rinne 14 auf.

Stückgut, welches als Niete, Schraube, Bolzen oder dergleichen ausgeführt ist, kann einer Qualitätskontrolle unterzogen werden, um Abweichungen von einer vorbestimmten Geometrie respektive Abmessung des stiftförmigen Stückgutes festzustellen. Hierzu werden Länge und Durchmesser des Stückgutes von einer, insbesondere berührungslos arbeitenden, Messvorrichtung 22 erfasst und ausgewertet. Um das insbesondere als Nieten, Schrauben, Bolzen oder dergleichen ausgeführte Stückgut, welches von dem als endlos umlaufenden Förderband 8 ausgeführten Fördermittel innerhalb des Behältnisses 2 von der Annahmeebene zur Abgabeebene transportiert wird, mittels einer solchen Messvorrichtung 22 reproduzierbar erfassen zu können, soll das der Messvorrichtung 22 zugeführte Stückgut stets eine im Wesentlichen gleiche, zur Längsachse 16 des Förderbandes 8 bzw. 8a parallele, Orientierung aufweisen. Dabei ist es für die Vermessung ohne Belang, ob das stiftförmige Stückgutmit dem Kopf oder Schaftende bzw. Fuß voran der Messvorrichtung 22 zugeführt werden. Es ist jedoch von Vorteil, wenn das der Messvorrichtung 22 zugeführte Stückgut mit einer einheitlichen Ausrichtung, d.h. nur mit dem Kopf oder nur mit dem Schaftende bzw. Fuß voran, die Messvorrichtung 22 passiert. Bevorzugt ist die Zuführung mit einer Ausrichtung des als Nieten, Schrauben, Bolzen oder dergleichen ausgeführten Stückgutes, bei der das Stückgut mit dem Fuß voran der Messvorrichtung 22 zugeführt werden. Für eine effiziente berührungslose, insbesondere optische, Erfassung des Stückgutes durch die Messvorrichtung 22 weist das Förderband 8 bzw. 8a zumindest an seiner außenseitigen Oberfläche eine dunkle Farbgebung auf, um einen größtmöglichen Helligkeitskontrast zu dem zu überprüfenden Stückgut zu erreichen.

Um eine gleiche Orientierung des Stückgutes auf dem Förderband 8, 8a beim Erreichen des Abgabebereichs zu erreichen, ist zumindest ein Separatorelement 30 vorgesehen, welches innerhalb des Behältnisses 2 angeordnet ist.

Die Darstellung in Fig. 6 zeigt eine schematische Darstellung des zumindest einen Separatorelementes 30 in perspektivischer Ansicht. Die - nicht dargestellte - Anordnung des zumindest einen Separatorelementes 30 innerhalb des Behältnisses 2 ist oberhalb der Annahmeebene und unterhalb der Abgabeebene entlang der Ausnehmung 7 vorgesehen. Das Separatorelement 30 überbrückt die Ausnehmung 7 zwischen den Wandabschnitten 3, 4. Das zumindest eine Separatorelement 30 erstreckt sich abschnittsweise in Längsrichtung des Förderbandes 8, wobei es einen die Förderfläche 9 im Wesentlichen bogenförmig überbrückenden Durchgang 31 aufweist. Das im Wesentlichen tunnelförmig ausgebildete Separatorelement 30 weist einen dem Boden des Behältnisses 2 zugewandten Einlaufbereich 32 sowie einen - in der Ansicht nicht sichtbaren - Auslaufbereich auf. Ein Pfeil FR veranschaulicht die Förderrichtung des durch das Förderband 8 zugeführten Stückgutes. Daraus ergibt sich die Anordnung des zumindest einen Separatorelementes 30 innerhalb des Behältnisses 2 in der Weise, dass der Durchgang 31 der Abgabeebene abgewandt ist.

Dem Einlaufbereich 32 des Separatorelementes 30 kommt die Aufgabe zu, das von dem als Förderband 8, 8a ausgeführten Fördermittel zugeführte Stückgut zu vereinzeln und auszurichten. Das vereinzelte Stückgut soll beim Austreten im Auslaufbereich des Separatorelementes 30 eine im Wesentlichen parallele Orientierung zur Längsachse 16 des Förderbandes 8 aufweisen. Um dies zu erreichen, ist der Durchgang 31 im Einlaufbereich 32 seitlich durch sich in Längsrichtung des Separatorelementes 30 aufweitende Ablenkabschnitte 33 begrenzt. Die Ablenkabschnitte 33 weisen in Längsrichtung als auch in Querrichtung des Separatorelementes 30 eine Neigung zur überbrückten Förderfläche 9 auf. Die Ablenkabschnitte 33 weiten sich in Längsrichtung des Separatorelementes 30 auf. Die Ablenkabschnitte 33 sind im Wesentlichen rampenförmig ausgebildet.

Der Einlaufbereich 32 weist beiderseits einen unteren Abschnitt 34 und einen oberen Abschnitt 35 auf, welche den Durchgang 31 quer zur Förderrichtung FR begrenzen.

Die unteren Abschnitte 34 erstrecken sich abschnittsweise in vertikaler Richtung des Separatorelementes 30 zwischen dem jeweiligen Wandabschnitt 3, 4 des Behältnisses 2 und den oberen Abschnitten 35. Dabei weisen die unteren Abschnitte 34 einen Abstand d zueinander auf, der kleiner als ein Abstand D der oberen Abschnitte 35 zueinander ist. Der Abstand d der unteren Abschnitte 34 ist kleiner als der Durchmesser des Kopfes und größer als der Durchmesser des Schaftes des Stückgutes, während der Abstand D der oberen Abschnitte 35 zumindest abschnittsweise größer als der Durchmesser des Kopfes des Schaftes ist.

Die unteren Abschnitte 34 und die sich daran anschließenden oberen Abschnitte 35 weisen einen senkrecht zu der überbrückten Ausnehmung 7, in Förderrichtung FR gesehen, etwa rampenförmig ansteigenden Vorderkantenverlauf auf. Hierdurch wird erreicht, dass das zugeführte Stückgut bereits an den Durchgang 31 seitlich begrenzenden Vorderkanten 36 des unteren Abschnittes 34 in Abhängigkeit von der Orientierung des zugeführten Stückgutes angehoben wird. Dies bewirkt zum einen, dass übereinanderliegendes Stückgut, welches bereits die erforderliche parallele Orientierung aufweist, separiert werden kann, indem sich die Stückgüter voneinander lösen. Das obenauf liegende Stückgut bewegt sich dabei im Allgemeinen zu einer Seite hin, so dass es über die Vorderkante 36 hinweg auf den Ablenkabschnitt 33 gelangt. Von dort gelangt es zurück auf einen der benachbarten Wandabschnitte 3 oder 4 und rutscht in das trichterförmige Behältnis 2 zurück. Zum anderen wird Stückgut, welches von dem Förderband 8 bereits mit einer abweichenden Orientierung zugeführt wird, in der Regel unmittelbar an der Vorderkante des unteren Abschnittes 34 seitlich abgelenkt, so dass eine Blockade des Durchgangs 31 vermeidbar ist. Das in Fig. 6 schematisch dargestellte Separatorelement 30 weist eine im Wesentlichen pyramidale Form auf. Es sind aber auch andere Formen wie eine im Wesentlichen im Wesentlichen zylindrische Form mit einem halbkreisförmigen Querschnitt denkbar.

Die Anordnung des zumindest einen Separatorelementes 30 erfolgt bevorzugt auswechselbar in dem Behältnis 2, was eine Anpassung hinsichtlich der Position entlang der Ausnehmung 7 als auch an andere Geometrien des zu vereinzelnden Stückgutes ermöglicht. Hierzu ist das zumindest eine Separatorelement 30 lösbar an dem Behältnis 2 befestigt. Vorteilhaft ist es, mehrere Separatorelemente 30 in Förderrichtung FR gesehen hintereinander anzuordnen, um bei einem Durchtritt von zwei übereinanderliegenden Stückgütern durch ein unteres Separatorelement 30 diese in einer nachfolgenden weiteren Separationsstufe zu vereinzeln.

Gemäß einer Weiterbildung kann die Ausnehmung 7 lediglich eine Breite B aufweisen, die etwa der Breite der auf dem Fördermittel 8, 8a angeordneten Mitnahmeelemente 15 entspricht, so dass die Mitnahmeelemente 15 berührungslos zwischen den zwei Wandabschnitten 3, 4, die die Ausnehmung 7 seitlich begrenzen, mit dem Fördermittel 8, 8a umlaufen. Dabei ist die Breite B der Ausnehmung 7 jedoch kleiner als zumindest der Durchmesser des Kopfes des stiftförmigen Stückgutes. Insbesondere ist die Breite B kleiner als der Durchmesser des Fußes des Stückgutes gewählt. Hierdurch wird erreicht, dass das von einem jeweiligen Mitnahmeelement 15 mitgeführte Stückgut nicht unmittelbar auf der Förderfläche 9 des Fördermittels 8, 8a aufliegt, sondern sich auf den benachbarten Wandabschnitten 3, 4 des Behältnisses 2 abstützt. Dabei gleiten Kopf und Fuß des als Niet, Schraube, Bolzen oder dergleichen ausgeführten Stückgutes auf der Oberfläche der Wandabschnitte 3, 4. Dies hat den Effekt, dass das von einem Mitnahmeelement 15 geförderte Stückgut aufgrund der Lage des Schwerpunkts im Bereich des Kopfes des Stückgutes bei einer Ausrichtung mit dem Kopf voran vor oder spätestens mit dem Erreichen des Separatorelementes 30 in das Behältnis 2 zurückrutscht. Hingegen wird Stückgut, welches mit dem Fuß voran liegend von einem Mitnahmeelement 15 erfasst wird, d.h. das Mitnehmerelement 15 erfasst dessen Kopf, zumindest bis zu dem Separatorelement 30 weitergefördert. Auf diese Weise lässt sich die Orientierung des Stückgutes festlegen, wodurch die nachfolgende Vermessung durch die nachgeordnete Messvorrichtung 22 vereinfacht wird.

**Bezugszeichenliste**

| | | | |
|---|---|---|---|
| 1 | Vorrichtung | 32 | Einlaufbereich |
| 2 | Behältnis | 33 | Ablenkabschnitt |
| 3 | Wandabschnitt | 34 | Unterer Abschnitt |
| 4 | Wandabschnitt | 35 | Oberer Abschnitt |
| 3a, 4a | Vorderes Segment | 36 | Vorderkante |
| 3b, 4b | Hinteres Segment | | |
| 5 | Rückwand | B | Breite von 7 |
| 6 | Mittelquerebene | d | Abstand von 34 |
| 7 | Ausnehmung | D | Abstand von 35 |
| 8 | Förderband | FR | Förderrichtung |
| 8a | Förderband | α | Neigung |
| 9 | Förderfläche | β | Neigung |
| 10 | Vorderkante | | |
| 11 | Vorderkante | | |
| 12 | Lasche | | |
| 13 | Rutsche | | |
| 14 | Rinne | | |
| 15 | Mitnehmerelement | | |
| 16 | Längsachse | | |
| 17 | Fördervorrichtung | | |
| 18 | Riementrieb | | |
| 19 | Förderband | | |
| 20 | Separationselement | | |
| 21 | Ausgabevorrichtung | | |
| 22 | Messvorrichtung | | |
| 23 | Gestell | | |
| | | | |
| 30 | Separatorelement | | |
| 31 | Durchgang | | |

## Patentansprüche

1. Vorrichtung (1) zum Vereinzeln und Ausrichten von stiftförmigem, einen Kopf und einen Schaft aufweisendem Stückgut, insbesondere Nieten, Schrauben, Bolzen oder dergleichen, umfassend:
- ein im Wesentlichen trichterförmiges Behältnis (2) zur Aufnahme des Stückgutes, mit zumindest zwei Wandabschnitten (3, 4), welche das Behältnis (2) zumindest in einem vorderen Bereich begrenzen und zu einer Mittelquerebene (6) des Behältnisses (2) unter einem Winkel geneigt angeordnet sind, sowie einer Rückwand (5),
- ein unterhalb einer die beiden Wandabschnitte (3, 4) beabstandenden, insbesondere schlitzförmigen, Ausnehmung (7) angeordnetes endlos umlaufendes Fördermittel (8, 8a), welches das Stückgut von einer Annahmeebene auf eine höher gelegene Abgabeebene fördert,
- wobei das Fördermittel (8, 8a) eine mit Mitnahmeelementen (15) versehene Förderfläche (9) aufweist,
**dadurch gekennzeichnet,**
**dass** innerhalb des Behältnisses (2) zumindest ein die Ausnehmung (7) zwischen den Wandabschnitten (3, 4) überbrückendes Separatorelement (30) angeordnet ist, welches sich abschnittsweise in Längsrichtung des Fördermittels (8, 8a) erstreckt und einen die Förderfläche (9) im Wesentlichen bogenförmig überbrückenden Durchgang (31) aufweist, mit einem Einlaufbereich (32), der seitlich durch sich in Längsrichtung des zumindest einen Separatorelementes (30) aufweitende Ablenkabschnitte (33) abschnittsweise begrenzt ist.

2. Vorrichtung (1) nach Anspruch 1, **dadurch gekennzeichnet, dass** der Einlaufbereich (32) beidseitig einen unteren Abschnitt (34) und einen oberen Abschnitt (35) aufweisen, die den Durchgang (31) quer zur Förderrichtung (FR) begrenzen, wobei sich die unteren Abschnitte (34) in vertikaler Richtung des Separatorelementes (30) abschnittsweise zwischen dem jeweiligen Wandabschnitt (3, 4) und dem oberen Abschnitt (35) erstrecken und die unteren Abschnitte (34) einen Abstand (d) zueinander aufweisen, der kleiner als ein Abstand (D) der oberen Abschnitte (35) zueinander ist.

3. Vorrichtung (1) nach Anspruch 2, **dadurch gekennzeichnet, dass** der Abstand (d) der unteren Abschnitte (34) kleiner als der Durchmesser des Kopfes und größer als der Durchmesser des Schaftes ist, während der Abstand (D) der oberen Abschnitte (35) zumindest abschnittsweise größer als der Durchmesser des Kopfes des Schaftes ist.

4. Vorrichtung (1) nach einem der vorangehenden Ansprüche, **dadurch gekennzeichnet, dass** die Ablenkabschnitte (33) einen vertikal zur Förderfläche (9) im Wesentlichen rampenförmig ansteigenden Verlauf aufweisen.

5. Vorrichtung (1) nach einem der vorangehenden Ansprüche, **dadurch gekennzeichnet, dass** das zumindest eine Separatorelement (30) eine im Wesentlichen zylindrische Form aufweist.

6. Vorrichtung (1) nach einem der vorangehenden Ansprüche, **dadurch gekennzeichnet, dass** das zumindest eine Separatorelement (30) eine im Wesentlichen pyramidale Form aufweist.

7. Vorrichtung (1) nach einem der vorangehenden Ansprüche, **dadurch gekennzeichnet, dass** das zumindest eine Separatorelement (30) entlang der Ausnehmung (7) oberhalb der Annahmeebene und unterhalb der Abgabeebene angeordnet ist.

8. Vorrichtung (1) nach einem der vorangehenden Ansprüche, **dadurch gekennzeichnet, dass** das zumindest eine Separatorelement (30) auswechselbar in dem Behältnis (2) angeordnet ist.

9. Vorrichtung (1) nach einem der vorangehenden Ansprüche, **dadurch gekennzeichnet, dass** der Vorrichtung (1) eine Messvorrichtung (22) zugeordnet ist, welche zur Erfassung der Geometrie des Stückgutes eingerichtet ist.

10. Vorrichtung (1) nach Anspruch 9, **dadurch gekennzeichnet, dass** die Messvorrichtung (22) zur optischen Erfassung der Geometrie des Stückgutes eingerichtet ist.

11. Vorrichtung (1) nach einem der vorangehenden Ansprüche, **dadurch gekennzeichnet, dass** die außenseitige Oberfläche des Fördermittels (8, 8a), auf welcher das Stückgut aufliegt, eine dunkle Farbgebung aufweist.

12. Vorrichtung (1) nach einem der vorangehenden Ansprüche, **dadurch gekennzeichnet, dass** die Ausnehmung (7) eine Breite aufweist, die etwa der Breite der auf dem Fördermittel (8, 8a) angeordneten Mitnahmeelemente (15) entspricht, so dass die Mitnahmeelemente (15) berührungslos zwischen den zwei Wandabschnitten (3, 4) geführt werden, die Breite der Ausnehmung (7) jedoch kleiner als zumindest der Durchmesser des Kopfes des stiftförmigen Stückgutes ist.

13. Vorrichtung (1) nach einem der Ansprüche 1 bis 12, **dadurch gekennzeichnet, dass** das Fördermittel (8, 8a) durch eine elektromechanische, mechanische oder pneumatische Aktuatorik antreibbar ist.

14. Vorrichtung (1) nach Anspruch 13, **dadurch gekennzeichnet, dass** die Ansteuerung der Aktuatorik durch eine Steuerungsvorrichtung in Abhängigkeit von den Signalen der Messvorrichtung (22) erfolgt.
